# EUROPEAN PATENT SPECIFICATION

(11) **EP 0 401 376 B1**
(45) Date of publication and mention of the grant of the patent: **13.03.1996**
(21) Application number: 89909438.7
(22) Date of filing: 22.08.1989
(51) Int. Cl.: G05B 19/406

(54) **SYSTEM FOR DIAGNOSING CNC**
DIAGNOSESYSTEM FÜR NUMERISCHE REGELUNGSEINHEITEN
SYSTEME DE DIAGNOSTIC POUR UNITE DE COMMANDE NUMERIQUE

(30) Priority: 02.09.1988 JP 219864/88
(43) Date of publication of application: 12.12.1990
(73) Proprietor: FANUC LTD., Minamitsuru-gun, Yamanashi 401-05 (JP)
(72) Inventor: KINOSHITA, Jiro Fanuc Mansion Harimomi 6-210, Minamitsuru-gun Yamanashi 401-05 (JP)
(74) Representative: Brunner, Michael John
(86) International application number: JP8900855
(87) International publication number: WO9002981

(56) References cited:
- EP-A- 0 056 060
- JP-A- 6 249 518
- JP-A- 6 336 302
- JP-A-55 150 012
- JP-A-57 114 906
- JP-A-62 224 808
- JP-A-62 243 009
- WERKSTATTSTECHNIK, ZEITSCHRIFT FÜR INDUSTRIELLE FERTIGUNG vol. 75, no. 9, September 1985, BERLIN DE pages 583 - 586 G. PRITSCHOW ET AL 'Erweiterung der Diagnosefunktionene einer numerischen Steureung'
- PATENT ABSTRACTS OF JAPAN vol. 10, no. 223 (P-483)(2279) 5 August 1986 & JP-A-61 59 504 ( AMADA METORETSUKUSU ) 27 March 1986
- PATENT ABSTRACTS OF JAPAN vol. 9, no. 207 (P-382)(1930) 24 August 1985 & JP-A-60 68 406 ( MITSUBISHI ) 19 Aril 1985

## Description

### TECHNICAL FIELD

The present invention relates to a diagnosis system for monitoring the interior state of a numerical control apparatus (CNC), and more specifically, to a CNC diagnosis system provided with a diagnostic processor.

### BACKGROUND ART

Numerical control apparatuses and robot control apparatuses utilizes a multi-processor system including a plurality of processors, to enable simultaneous control of a multiplicity of axes. These control apparatuses comprise a plurality of the processors, many kinds of memories, a multiplicity of I/O interfaces, a position control circuit and the like, and if a malfunction occurs in any one of these elements, it is often difficult to detect exactly which element has malfunctioned.

To cope with this problem, the statuses of the internal memories, I/O signals and the like are displayed at a display, but when a malfunction occurs in a processor itself, it is difficult to detect the cause of the malfunction when only the statuses of the internal memories, I/O signals and the like are displayed, thus it often takes considerable time to restore a numerical control apparatus to normal operation.

EP-A-0056060 discloses an NC apparatus with integral fault diagnosis processor. "WERKSTATTSTECHINK ZEITSCHRIFT FÜR INDUSTRIELLE FERTIGUNG" Vol. 75, No. 9, SEPT 1985, discloses a machining apparatus with external fault diagnosis processor.

Taking the above into consideration, an object of the present invention is to provide a CNC diagnosis system utilising a diagnostic processor.

To solve the above problem, there is provided a diagnosis system for a numerical control apparatus having a main processor for acting as a host processor controlling other processors in a normal operation mode, the system comprising:
a diagnostic processor, connected to said main and said other processors during a normal operation mode, and for acting as the host processor in a diagnosis mode, to detect the cause of a malfunction of said numerical control apparatus; and
a diagnostic RAM connected to said diagnostic processor; characterised by:
a communication line, connected to said diagnostic processor, for receiving and providing to said diagnostic processor, externally originated diagnostic software in accordance with the cause of the malfunction from an external processor for instructing operation of said numerical control apparatus; and
   by the RAM storing the externally originated diagnostic software received via said communication line.

When a malfunction occurs, the CNC is switched to a diagnostic mode, and the diagnostic processor executes the diagnostic software, as the host processor, and diagnoses the other processors to thereby detect the cause of malfunction.

### BRIEF DESCRIPTION OF THE DRAWINGS

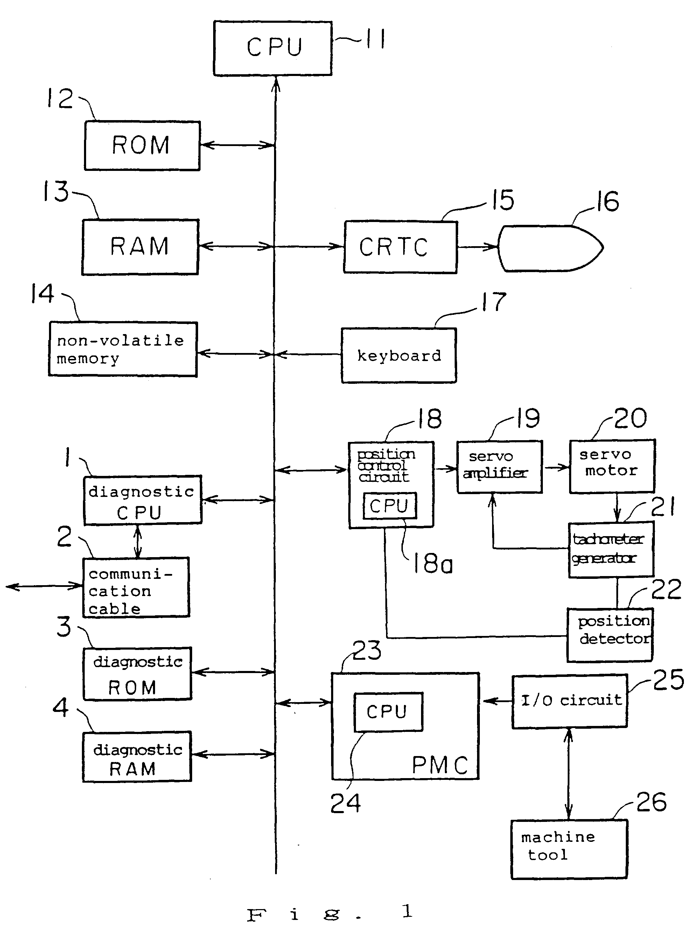

Figure 1 is a block diagram of a numerical control apparatus (CNC) as an embodiment of the present invention.

### BEST MODE OF CARRYING OUT THE INVENTION

An embodiment of the present invention will be describe below with reference to a drawing.

Figure 1 shows a hardware arrangement of a numerical control apparatus (CNC) as the embodiment of the present invention, wherein 1 designates a diagnostic processor which usually monitors other processors but executes diagnostic software in a diagnosis mode to detect the cause of a malfunction in the other processors.

Numeral 2 designates a communication port for connecting the diagnostic processor 1 with an external host computer through a communication line, and receiving instructions for a diagnosis from, or transmitting the result of a diagnosis to, the host computer.

Numeral 3 designates a diagnostic ROM in which diagnostic software is stored; and 4 designates a diagnostic RAM which stores diagnostic software transmitted from the host computer, or temporarily stores diagnostic data to be transmitted to the host computer.

Numeral 11 designates a processor for controlling the CNC as a whole; 12 designates a ROM in which a control program is stored; 13 designates a RAM in which various data is stored; and 14 designates a non-volatile memory in which a machining program, parameters and the like are stored, and comprises a CMOS or the like backed up by a battery.

Numeral 15 designates a display control circuit for converting a digital signal to a video signal; 16 designates a display unit, which is a CRT, a liquid crystal display unit or the like; and 17 designates a keyboard for inputting various data.

Numeral 18 designates a position control circuit for controlling a servo motor; 19 designates a servo amplifier for controlling a speed of the servo motor; 20 designates the servo motor; 21 designates a tachometer generator for a speed feed back; and 22 designates a position detector and pulse coder, which comprises an optical scale or the like. Although as many as of these elements as the number of axes are installed, the elements only for one axis are shown here. The position control circuit 18 also contains an exclusive position control processor 18a, usually one CNC unit is provided with two to five of these processors. These position control processors 18a are also subjected to diagnosis to detect a malfunction thereof.

Numeral 23 designates a programmable machine controller (PMC) for receiving instructions such as an M function, T function and the like, after converting same to signals, outputting them to thereby control a machine tool; 24 designates a processor for controlling the PMC 23; and 25 designates an I/O circuit connected to the machine tool 26 and receiving and transmitting digital signals from and to an external unit.

In a usual operation, the processor 11 controls the CNC as a whole, as a host processor for the overall CNC. The diagnostic processor 1 monitors only the processor 11, the position control processor 18a, and the processor 24 for the PMC, and when an abnormal state is detected, displays same at the display unit 16.

When a malfunction of the CNC occurs and the cause thereof must be detected, the CNC is switched to a diagnosis mode and the diagnostic processor 1, as the host processor, executes the diagnostic software.

The diagnostic software may be prestored in the diagnostic ROM 3, or transmitted from an external host computer and stored in the diagnostic RAM 4 as necessary. When the CNC is not connected to the host computer, the diagnostic software must be stored in the diagnostic ROM 3. Further, when the CNC ic connected to the host computer, suitable diagnostic software can be transmitted to the diagnostic RAM 4 and executed in accordance with the cause of the malfunction. In this case, the result of a diagnosis can be transmitted to the host computer through the communication port 2, and processed thereby. For example, a service engineer working at the host computer can diagnose a malfunction without the necessity to actually go and inspect the CNC.

As described above, according to the present invention, since the diagnostic processor is provided to diagnose the other processors in the diagnosis mode, the time required for restoring a normal operation is shortened after a malfunction has occurred, and thus the operational reliability is improved.

## Claims

1. A diagnosis system for a numerical control apparatus having a main processor (11) for acting as a host processor controlling other processors (18a,24) in a normal operation mode, the system comprising:
a diagnostic processor (1), connected to said main and said other processors during a normal operation mode, and for acting as the host processor in a diagnosis mode, to detect the cause of a malfunction of said numerical control apparatus; and
a diagnostic RAM (4) connected to said diagnostic processor; characterised by:
a communication line (2), connected to said diagnostic processor (1), for receiving and providing to said diagnostic processor, externally originated diagnostic software in accordance with the cause of the malfunction from an external processor for instructing operation of said numerical control apparatus; and
by the RAM (4) storing the externally originated diagnostic software received via said communication line.

## Patentansprüche

1. Diagnosesystem für eine numerische Steuereinrichtung mit einem Hauptprozessor (11), der als Host-Prozessor fungiert und andere Prozessoren (18a, 24) im Normalbetrieb steuert, mit:
einem Diagnoseprozessor (1), der an den Haupt- und die anderen Prozessoren im Normalbetrieb angeschlossen ist und in einem Diagnosemodus als Host-Prozessor arbeitet, um die Ursache einer Fehlfunktion der numerischen Steuereinrichtung festzustellen, und mit
einem an den Diagnoseprozessor angeschlossenen Diagnose-RAM (4), gekennzeichnet durch:
eine an den Diagnoseprozessor (1) angeschlossene Verbindungsleitung (2) zum Empfangen eines extern entstandenen Diagnoseprogramms entsprechend der Fehlfunktionsursache von einem externen Prozessor und Einspeisen in den Diagnoseprozessor zum Anweisen des Betriebes der numerischen Steuereinrichtung; und
Einspeichern des extern entstandenen, auf der besagten Verbindungsleitung anstehenden Diagnoseprogramms in dem RAM (4).

## Revendications

1. Un système de diagnostic pour un appareil à commande numérique présentant un organe de traitement principal (11) prévu pour agir en tant qu'organe de traitement central commandant d'autres organes de traitement (18a, 24) dans un mode de fonctionnement normal, le système comprenant :
un organe de traitement de diagnostic (1), relié audit organe de traitement principal ainsi qu'auxdits autres organes de traitement pendant un mode de fonctionnement normal, et prévu pour agir en tant qu'organe de traitement central dans un mode de diagnostic, afin de détecter la cause d'un mauvais fonctionnement dudit appareil à commande numérique ; et
une RAM de diagnostic (4) reliée audit organe de traitement de diagnostic ; caractérisé par :
une ligne de communication (2), reliée audit organe de traitement de diagnostic (1), pour recevoir et fournir audit organe de traitement de diagnostic, un logiciel de diagnostic d'origine externe en accord avec la cause du mauvais fonctionnement à partir d'un organe de traitement externe pour donner une instruction de fonctionnement dudit appareil à commande numérique ; et
en ce que la RAM (4) stocke le logiciel de diagnostic d'origine externe reçu par l'intermédiaire de ladite ligne de communication.
